# EUROPEAN PATENT SPECIFICATION

(11) **EP 4 389 548 B1**
(45) Date of publication and mention of the grant of the patent: **24.09.2025**
(21) Application number: 23217789.9
(22) Date of filing: 18.12.2023
(51) Int. Cl.: B60T 13/58, B60W 30/18

(54) **CONTROL METHOD OF AN AUXILIARY BRAKING SYSTEM OF AN AGRICULTURAL OR WORK VEHICLE AND A VEHICLE CONFIGURED TO IMPLEMENT THE METHOD**
STEUERUNGSVERFAHREN EINES HILFSBREMSSYSTEMS EINES LANDWIRTSCHAFTLICHEN ODER ARBEITSFAHRZEUGS UND ZUR IMPLEMENTIERUNG DES VERFAHRENS KONFIGURIERTES FAHRZEUG
PROCÉDÉ DE COMMANDE D'UN SYSTÈME DE FREINAGE AUXILIAIRE D'UN VÉHICULE AGRICOLE OU DE TRAVAIL ET VÉHICULE CONÇU POUR METTRE EN UVRE LE PROCÉDÉ

(30) Priority: 21.12.2022 IT 202200026307
(43) Date of publication of application: 26.06.2024
(73) Proprietor: CNH Industrial Italia S.p.A., 10156 Torino (IT)
(72) Inventor: TENNERIELLO, Luigi, 10156 Turin (IT); DANNERBAUER, Harald, 4300 St. Valentin (AT); PIERATTINI, Gianluca, 10156 Turin (IT)
(74) Representative: CNH Industrial IP Department

(56) References cited:
- EP-A1- 3 995 684

## Description

### Field of the invention

The present invention relates to the field engine braking systems in agricultural vehicles and work vehicles, such as earthmoving machines.

### State of the art

Heavy vehicles, in addition to being equipped with service brakes acting on the wheels, are often also equipped with auxiliary braking systems, which are named as engine brakes. Several engine braking techniques are well known. All of them are based on the fact of applying a resistant torque to the crankshaft, while the fuel injection is inhibited, with the effect of slowing down the vehicle, avoiding the overloading of the service brakes. Document EP 3 995 684 A1 gives an example of engine control of an agricultural or work vehicle comprising an internal combustion engine operatively associated with at least one vehicle wheel, comprising a PTO to drive an implement in rotation.

Generally, auxiliary braking is controlled by a lever other than the brake pedal.

An engine braking technique is based on the dissipation of compression energy. Basically, the air introduced into the cylinders is released early in the expansion phase through the action of a variable position camshaft. For this reason, this technique is named as "decompression".

Another technique is based on the throttling of a valve, named as "flap", arranged on the exhaust manifold, in order to increase the back pressure and therefore the pumping work by the engine.

Another technique named as "aux load" is based on the control of auxiliary devices, such as for example the cooling fan of the cooling radiator(s), in order to increase the resistant torque absorbed by these auxiliary devices.

Another technique is based on the so-called "retarder", i.e. a device belonging to hydraulic transmissions to dissipate rotation energy into heat.

The incremental application of resistant torque to the drive shaft is also known, by sequentially activating one of the techniques listed above, according to the degree of deviation of an auxiliary braking activation lever.

For this purpose, the user can regulate the intervention of the auxiliary braking by adjusting the inclination of the operating lever, similar to what happens with the pedal which controls the service brakes.

However, in vehicles equipped with low inertia, or with high priority of the auxiliary braking control, the intervention of the auxiliary braking can be too invasive, forcing the operator to activate and deactivate it continuously, in order to avoid the vehicle being braked excessively, especially in predetermined operating conditions of the vehicle.

Unless specifically excluded in the detailed description that follows, what is described in this chapter is to be considered as an integral part of the detailed description.

### Summary of the invention

The purpose of the present invention is to control the activation of the auxiliary braking so as to avoid excessive intervention by the operator.

The basic idea of the present invention is to adjust the activation of the auxiliary braking taking into account, in addition, the comparison between the actual vehicle speed and the target speed set by the operator, the resistant torque generated by a load connected to the PTO of the prime mover of the vehicle.

Advantageously, when the resistant load applied to the PTO of the vehicle is significant, the intervention of the auxiliary braking is modulated so as to avoid excessive slowing down of the vehicle, even when the speed error between the current speed and the speed set by the operator is relevant.

According to a first preferred variant of the invention, the resistant torque applied to the PTO is measured by means of a torque sensor or estimated and the resistant torque generated by the auxiliary braking is controlled so that a relative intensity is inversely proportional to the resistant torque applied to the PTO.

Obviously, the activation of the auxiliary braking can be of the ON/OFF type or it can be adjusted by means of a proportional control. However, the engine brake technique selected ensures correct resistant torque intensity.

According to a preferred variant of the invention which can be combined with any of the previous variants, the resistant torque generated by the auxiliary braking is controlled such as to be directly proportion to the vehicle speed.

According to a further preferred variant of the invention which can be combined with any of the previous variants, the auxiliary braking is activated automatically when the vehicle exceeds a maximum homologation speed.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Figure 1 shows a diagram according to which a heat engine interacts with the various subsystems;
figure 2 shows an exemplary flow diagram of the method object of the present invention:
   figure 3 shows an agricultural vehicle to which an implement is connected which draws the motion from the PTO of the heat engine of the agricultural vehicle, in which the agricultural vehicle is equipped with processing means for implementing the method outlined in figure 2.

The same reference numbers and letters in the figures identify the same elements or components or functions.

In flowcharts, the blocks shown in dashed lines are completely optional.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description of preferred embodiments

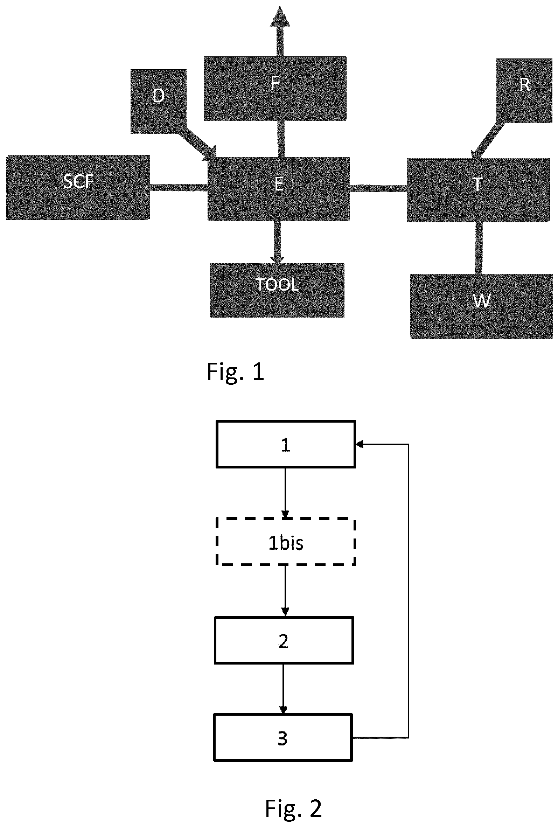

With reference to figure 1, a heat engine E drives in rotation a cooling fan SCF of a relating cooling circuit. The connection can be mechanical or electrical, in the sense that the heat engine rotates an electric generator which feeds the electric fan.

The engine is also connected with a vehicular transmission T to drive the vehicular wheels W in rotation.

The thermal engine of an agricultural or work vehicle, generally, while moving, transfers a part of the driving torque to an implement "TOOL", for example a seeder, or a shredder, or a harvester, or a boom etc..

The torque transferred to the implement can even exceed 50% of the total torque delivered by the heat engine.

When the vehicle faces a steep descent, even if the operator fully releases the accelerator pedal, the inertia of the vehicle can be such as to lead it to increase its speed, despite the braking torque generated by the implement.

However, the activation of an engine braking technique can cause the vehicle to decelerate excessively so as to cause the operator to continuously alternate between the activation and deactivation of the auxiliary braking. According to the present invention, the intensity of the auxiliary braking is calculated on the basis of the resistant torque generated by the implement connected to the PTO of the heat engine.

The intensity of the braking torque is inversely proportional to the intensity of the resistant torque applied to the PTO. This fact ensures that a proportionate braking effect is obtained.

An auxiliary braking system is defined as the set of all possible auxiliary braking techniques described above.

The auxiliary braking system therefore comprises two or more of
- A decompressor device D,
- A flap F located on the exhaust manifold,
- An device SCF for regulating the rotation speed of the cooling fan of the engine cooling circuit,
- A retarder R.

An processing unit ECU is arranged to receive various input signals including
- A signal representative of the rotational speed of the heat engine,
- A signal representative of the speed of the vehicle,
- A signal representative of a resistant torque generated by the PTO of the heat engine,
- A signal representative of a deviation of an auxiliary braking system activation control or lever,
and is suitable for controlling the auxiliary braking system so as to generate a resistant torque having an intensity directly proportional to said deviation of the control or lever and inversely proportional to the intensity of the resistant torque generated by the PTO.

Preferably, the processing unit is configured to monitor the signal representative of the vehicle speed and to generate said resistant torque having intensity according to a directly proportionality also of the intensity of the vehicle speed.

It is worth highlighting that the intensity of the vehicle speed can be obtained indirectly by knowing a state of the transmission T and the value of the heat engine rotation speed.

Figure 2 shows an example of implementation of the method object of the present invention:
- (Step 1) acquisition of a first value of a resistant torque applied to the PTO,
- (Step 1bis) optional acquisition of a current vehicle speed value
- (Step 2) calculation of a second resistant torque value function inversely proportional to the first resistant torque value, and optionally also directly proportional to said current vehicle speed value, to be generated by said auxiliary braking system,
- (Step 3) selection and activation of at least one engine brake device as a function of said second calculated resistant torque value.

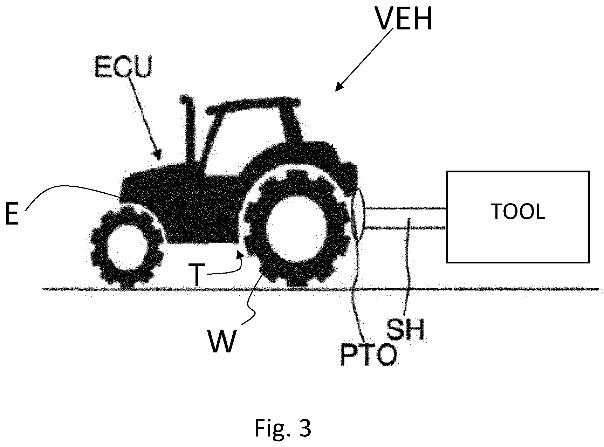

Obviously, this method can well be implemented by means of a processing unit ECU as shown in figure 3, in which a vehicle VEH is shown to which an implement TOOL connected via a shaft SH to the PTO of the combustion engine E of the vehicle is applied.

The present invention can advantageously be implemented through a computer program comprising coding means for carrying out one or more steps of the method, when this program is executed on a computer. Therefore, it is understood that the scope of protection extends to said computer program and also to computer-readable means comprising a recorded message, said computer-readable means comprising program coding means for carrying out one or more steps of the method, when said program is run on a computer. Variants of the non-limiting example described are possible, without however departing from the scope of protection of the present invention, as defined by the subject-matter of the claims.

From the description given above, the person skilled in the art is capable of realizing the object of the invention without introducing further constructive details.

## Claims

1. Control method of an auxiliary braking system of an agricultural or work vehicle (VHE) comprising an internal combustion engine (E) operatively associated with at least one vehicle wheel (W), comprising a PTO to drive an implement (Tool) in rotation, wherein the auxiliary braking system comprises at least two engine braking device (F, SCF, R, D), the method comprising the following steps in succession:
- (Step 1) acquisition of a first value of a resistant torque applied to the PTO,
- (Step 2) calculation of a second resistant torque value, function inversely proportional to the first resistant torque value, to be generated by means of said auxiliary braking system,
- (Step 3) selection and activation of at least one engine brake device as a function of said second calculated resistant torque value.

2. The method according to claim 1, wherein when said selected engine braking device is configured to generate a resistant torque of controllable magnitude, said actuation comprises controlling said magnitude to equal said second calculated torque value, vice-versa when said selected engine braking device is configured to generate a fixed resistant torque, then said fixed resistant torque is less than or equal to said second calculated torque value.

3. The method according to claim 1 or 2, wherein the method further comprises
- (Step 1bis) preliminary acquisition of a current speed value of the vehicle and in which
said calculation (Step 2) of the second resistant torque value is a function inversely proportional to the first resistant torque value and directly proportional to said current vehicle speed value.

4. Method according to claim 3, wherein said current speed value is acquired by means of a speed sensor or is calculated by acquiring a current value of the rotational speed of the engine, by means of a speed sensor, and calculating the current speed of the vehicle as a function of an operating condition of a transmission (T) arranged to interconnect the internal combustion engine (E) with said at least one wheel (W).

5. Method according to any one of the preceding claims 1 - 3, wherein said auxiliary braking system comprises at least two among
- a flap (F) arranged on an exhaust manifold of the internal combustion engine,
- a variable speed cooling fan (SCF),
- a decompressor device (D) associated with a valve control actuator of a cylinder of the internal combustion engine (E),
- a retarder (R) associated with a transmission (T) arranged to interconnect the internal combustion engine (E) with said at least one wheel (W).

6. Method according to any one of claims 3 - 5, wherein the method provides that when the current speed of the vehicle exceeds a vehicle-type approval speed threshold, then the second resistant torque value is set to the maximum possible as long as the current speed is higher than the type-approval speed threshold.

7. Agricultural vehicle (VHE) comprising
- an internal combustion engine (E) operatively associated with at least one vehicular wheel (W) and comprising a PTO for driving a tool (Tool) in rotation and
- an auxiliary braking system includes at least two engine braking devices (F, SCF, R, D),
- processing means configured to acquire a first value of a resistant torque applied to the PTO, to calculate a second resistant torque value which is inversely proportional to the first resistant torque value, to be generated by said auxiliary braking system, and consequently to select and activate at least one engine braking device as a function of said second calculated resistant torque value.

8. The vehicle according to claim 7, wherein when said engine braking device is configured to generate a resistant torque of controllable intensity, said processing means is further configured to control said intensity to equal said second calculated torque value.

9. Vehicle according to claim 8, wherein the processing means are further configured to preliminarily acquire a current speed value of the vehicle so as to calculate the second resistance torque value as a function inversely proportional to the first resistance torque value and directly proportional to the current speed value of the vehicle.

10. Vehicle according to any one of claims 7 - 9, wherein said auxiliary braking system comprises at least two among
- a flap (F) arranged on an exhaust manifold of the internal combustion engine,
- a variable speed cooling fan (SCF),
- a decompressor device (D) associated with a valve control actuator of a cylinder of the internal combustion engine (E),
- a retarder (R) associated with a transmission (T) arranged to interconnect the internal combustion engine (E) with said at least one wheel (W).

11. Vehicle according to claim 10, wherein said processing means are further configured to set the second resistant torque value to the maximum possible, when the current speed of the vehicle exceeds a predetermined type-approval speed threshold, as long as the current speed is higher than said type-approval speed threshold.

## Patentansprüche

1. Steuerungsverfahren einer Hilfsbremsanlage eines landwirtschaftlichen Fahrzeugs oder Arbeitsfahrzeugs (VHE), das einen Verbrennungsmotor (E) umfasst, der wirkend mit zumindest einem Rad (W) des Fahrzeugs verbunden ist, und eine Zapfwelle (PTO) umfasst, um ein Arbeitsgerät (Tool) rotatorisch anzutreiben, wobei die Hilfsbremsanlage zumindest zwei Motorbremsvorrichtungen (F, SCF, R, D) umfasst, wobei das Verfahren nacheinander die folgenden Schritte umfasst:
(Schritt 1) Erfassen eines ersten Werts eines auf die Zapfwelle wirkenden Widerstandsmoments,
(Schritt 2) Berechnen eines zweiten Widerstandsmomentwerts, der umgekehrt proportional zu dem ersten Widerstandsmomentwert ist und durch die Hilfsbremsanlage zu erzeugen ist,
(Schritt 3) Auswählen und Aktivieren zumindest einer Motorbremsvorrichtung in Abhängigkeit von dem berechneten zweiten Widerstandsmomentwert.

2. Verfahren nach Anspruch 1, wobei, wenn die ausgewählte Motorbremsvorrichtung dazu eingerichtet ist, ein Widerstandsmoment variabler Größe zu erzeugen, das Aktivieren das Regeln dieser Größe derart umfasst, dass sie dem berechneten zweiten Widerstandsmomentwert entspricht, und umgekehrt, wenn die ausgewählte Motorbremsvorrichtung dazu eingerichtet ist, ein festes Widerstandsmoment zu erzeugen, dieses feste Widerstandsmoment dann kleiner als oder gleich dem berechneten zweiten Widerstandsmomentwert ist.

3. Verfahren nach Anspruch 1 oder 2, wobei das Verfahren weiterhin umfasst:
(Schritt 1bis) vorläufiges Erfassen eines aktuellen Geschwindigkeitswerts des Fahrzeugs, und wobei
das Berechnen (Schritt 2) des zweiten Widerstandsmomentwerts eine Funktion ist, die umgekehrt proportional zu dem ersten Widerstandsmomentwert und direkt proportional zu dem aktuellen Geschwindigkeitswert des Fahrzeugs ist.

4. Verfahren nach Anspruch 3, wobei der aktuelle Geschwindigkeitswert mittels eines Geschwindigkeitssensors erfasst wird oder durch Erfassung eines aktuellen Werts der Drehzahl des Motors mittels eines Geschwindigkeitssensors und Berechnung der aktuellen Geschwindigkeit des Fahrzeugs in Abhängigkeit eines Betriebszustands eines Getriebes (T) berechnet wird, das dazu eingerichtet ist, den Verbrennungsmotor (E) mit dem mindestens einen Rad (W) zu verbinden.

5. Verfahren nach einem der vorhergehenden Ansprüche 1 bis 3, wobei die Hilfsbremsanlage mindestens zwei der folgenden umfasst:
eine Klappe (F), die an einem Abgaskrümmer des Verbrennungsmotors angeordnet ist,
ein Kühlgebläse mit variabler Drehzahl (SCF),
eine Dekompressionsvorrichtung (D), die mit einem Ventilbetätigungsaktor eines Zylinders des Verbrennungsmotors (E) verbunden ist,
einen Retarder (R), der mit einem Getriebe (T) verbunden ist, das dazu eingerichtet ist, den Verbrennungsmotor (E) mit dem mindestens einen Rad (W) zu verbinden.

6. Verfahren nach einem der Ansprüche 3 bis 5, wobei das Verfahren vorsieht, dass, wenn die aktuelle Geschwindigkeit des Fahrzeugs einen zulassungsrelevanten Geschwindigkeitsgrenzwert überschreitet, der zweite Widerstandsmomentwert auf das maximal mögliche gesetzt wird, solange die aktuelle Geschwindigkeit größer als der zulassungsrelevante Geschwindigkeitsgrenzwert ist.

7. Landwirtschaftliches Fahrzeug (VHE), umfassend:
einen Verbrennungsmotor (E), der wirkend mit mindestens einem Rad (W) des Fahrzeugs verbunden ist und eine Zapfwelle (PTO) umfasst, um ein Arbeitsgerät (Tool) rotatorisch anzutreiben, und
eine Hilfsbremsanlage, die zumindest zwei Motorbremsvorrichtungen (F, SCF, R, D) umfasst,
Verarbeitungsmittel, die dazu eingerichtet sind, einen ersten Wert eines auf die Zapfwelle wirkenden Widerstandsmoments zu erfassen, einen zweiten Widerstandsmomentwert zu berechnen, der umgekehrt proportional zu dem ersten Widerstandsmomentwert ist und durch die Hilfsbremsanlage zu erzeugen ist, und infolgedessen zumindest eine Motorbremsvorrichtung in Abhängigkeit von dem berechneten zweiten Widerstandsmomentwert auszuwählen und zu aktivieren.

8. Fahrzeug nach Anspruch 7, wobei, wenn die Motorbremsvorrichtung dazu eingerichtet ist, ein Widerstandsmoment variabler Intensität zu erzeugen, die Verarbeitungsmittel weiterhin dazu eingerichtet sind, die Intensität derart zu regeln, dass sie dem berechneten zweiten Widerstandsmomentwert entspricht.

9. Fahrzeug nach Anspruch 8, wobei die Verarbeitungsmittel weiterhin dazu eingerichtet sind, vorläufig einen aktuellen Geschwindigkeitswert des Fahrzeugs zu erfassen, um den zweiten Widerstandsmomentwert als Funktion zu berechnen, die umgekehrt proportional zu dem ersten Widerstandsmomentwert und direkt proportional zu dem aktuellen Geschwindigkeitswert des Fahrzeugs ist.

10. Fahrzeug nach einem der Ansprüche 7 bis 9, wobei die Hilfsbremsanlage mindestens zwei der Folgenden umfasst:
eine Klappe (F), die an einem Abgaskrümmer des Verbrennungsmotors angeordnet ist,
ein Kühlgebläse mit variabler Drehzahl (SCF),
eine Dekompressionsvorrichtung (D), die mit einem Ventilbetätigungsaktor eines Zylinders des Verbrennungsmotors (E) verbunden ist,
einen Retarder (R), der mit einem Getriebe (T) verbunden ist, das dazu eingerichtet ist, den Verbrennungsmotor (E) mit dem mindestens einen Rad (W) zu verbinden.

11. Fahrzeug nach Anspruch 10, wobei die Verarbeitungsmittel weiterhin dazu eingerichtet sind, den zweiten Widerstandsmomentwert auf das maximal mögliche zu setzen, wenn die aktuelle Geschwindigkeit des Fahrzeugs einen vorbestimmten zulassungsrelevanten Geschwindigkeitsgrenzwert überschreitet, solange die aktuelle Geschwindigkeit größer ist als der zulassungsrelevante Geschwindigkeitsgrenzwert.

## Revendications

1. Procédé de commande d'un système de freinage auxiliaire d'un véhicule agricole ou véhicule de travail (VHE) comprenant un moteur à combustion interne (E) associé fonctionnellement à au moins une roue de véhicule (W), comprenant une PDF pour entraîner un outil (Tool) en rotation, dans lequel le système de freinage auxiliaire comprend au moins deux dispositifs de freinage moteur (F, SCF, R, D), le procédé comprenant successivement les étapes suivantes :
- (Étape 1) acquisition d'une première valeur d'un couple résistant appliqué à la PDF,
- (Étape 2) calcul d'une seconde valeur de couple résistant, fonction inversement proportionnelle à la première valeur de couple résistant, à générer par le biais dudit système de freinage auxiliaire,
- (Étape 3) sélection et activation d'au moins un dispositif de frein moteur en fonction de ladite seconde valeur de couple résistant calculée.

2. Le procédé selon la revendication 1, dans lequel lorsque ledit dispositif de freinage moteur sélectionné est configuré pour générer un couple résistant d'amplitude contrôlable, ledit actionnement comprend le contrôle de ladite amplitude pour qu'elle soit égale à ladite seconde valeur de couple calculée, et inversement lorsque ledit dispositif de freinage moteur sélectionné est configuré pour générer un couple résistant fixe, alors ledit couple résistant fixe est inférieur ou égal à la seconde valeur de couple calculée.

3. Le procédé selon la revendication 1 ou la revendication 2, dans lequel le procédé comprend en outre
- (Étape Ibis) l'acquisition préliminaire d'une valeur de vitesse actuelle du véhicule et dans laquelle ledit calcul (Étape 2) de la seconde valeur de couple résistant est une fonction inversement proportionnelle à la première valeur de couple résistant et directement proportionnelle à ladite valeur de vitesse actuelle de véhicule.

4. Procédé selon la revendication 3, dans lequel ladite valeur de vitesse actuelle est acquise par le biais d'un capteur de vitesse ou est calculée en acquérant une valeur actuelle de la vitesse de rotation du moteur, à l'aide d'un capteur de vitesse, et en calculant la vitesse actuelle du véhicule en fonction d'un état de fonctionnement d'une transmission (T) agencée pour interconnecter le moteur à combustion interne (E) avec ladite au moins une roue (W).

5. Procédé selon l'une quelconque des revendications précédentes 1 à 3, dans lequel ledit système de freinage auxiliaire comprend au moins deux parmi
- un volet (F) agencé sur un collecteur d'échappement du moteur à combustion interne,
- un ventilateur de refroidissement à vitesse variable (SCF),
- un dispositif de décompression (D) associé à un actionneur de commande de vanne d'un cylindre du moteur à combustion interne (E),
- un ralentisseur (R) associé à une transmission (T) agencée pour interconnecter le moteur à combustion interne (E) avec ladite au moins une roue (W).

6. Procédé selon l'une quelconque des revendications 3 à 5, dans lequel le procédé prévoit que lorsque la vitesse actuelle du véhicule dépasse un seuil de vitesse d'homologation du type de véhicule, la seconde valeur de couple résistant est définie au maximum possible tant que la vitesse actuelle est supérieure au seuil de vitesse d'homologation.

7. Véhicule agricole (VHE) comprenant
- un moteur à combustion interne (E) associé de manière opérationnelle à au moins une roue de véhicule (W) et comprenant une PDF pour entraîner un outil (Tool) en rotation et
- un système de freinage auxiliaire incluant au moins deux dispositifs de freinage moteur (F, SCF, R, D),
- des moyens de traitement configurés pour acquérir une première valeur d'un couple résistant appliqué à la PDF, pour calculer une seconde valeur de couple résistant qui est inversement proportionnelle à la première valeur de couple résistant, à générer par ledit système de freinage auxiliaire, et par conséquent pour sélectionner et activer au moins un dispositif de freinage moteur en fonction de ladite seconde valeur de couple résistant calculée.

8. Le véhicule selon la revendication 7, dans lequel, lorsque ledit dispositif de freinage moteur est configuré pour générer un couple résistant d'intensité contrôlable, lesdits moyens de traitement sont en outre configurés pour contrôler ladite intensité afin qu'elle soit égale à ladite seconde valeur de couple calculée.

9. Véhicule selon la revendication 8, dans lequel les moyens de traitement sont en outre configurés pour acquérir préalablement une valeur de vitesse actuelle du véhicule de manière à calculer la seconde valeur de couple résistant comme une fonction inversement proportionnelle à la première valeur de couple résistant et directement proportionnelle à la valeur de vitesse actuelle du véhicule.

10. Véhicule selon l'une quelconque des revendications 7 à 9, dans lequel ledit système de freinage auxiliaire comprend au moins deux parmi
- un volet (F) agencé sur un collecteur d'échappement du moteur à combustion interne,
- un ventilateur de refroidissement à vitesse variable (SCF),
un dispositif de décompression (D) associé à un actionneur de commande de vanne d'un cylindre du moteur à combustion interne (E),
- un ralentisseur (R) associé à une transmission (T) agencée pour interconnecter le moteur à combustion interne (E) avec ladite au moins une roue (W).

11. Véhicule selon la revendication 10, dans lequel lesdits moyens de traitement sont en outre configurés pour définir la seconde valeur de couple résistant au maximum possible, lorsque la vitesse actuelle du véhicule dépasse un seuil de vitesse d'homologation du type de véhicule prédéterminé, tant que la vitesse actuelle est supérieure audit seuil de vitesse d'homologation du type de véhicule.
